# EUROPÄISCHE PATENTSCHRIFT

(11) **EP 2 474 090 B1**
(45) Veröffentlichungstag und Bekanntmachung des Hinweises auf die Patenterteilung: **11.12.2013**
(21) Anmeldenummer: 10734110.9
(22) Anmeldetag: 15.07.2010
(51) Int. Cl.: H02P 25/02, G01D 5/20, H02P 6/18

(54) **VERFAHREN UND VORRICHTUNG ZUR BESTIMMUNG EINER ROTORLAGE EINER SYNCHRONMASCHINE**
METHOD AND DEVICE FOR DETERMINING A ROTOR POSITION OF A SYNCHRONOUS MACHINE
PROCÉDÉ ET DISPOSITIF POUR DÉTERMINER UNE POSITION DE ROTOR D'UNE MACHINE SYNCHRONE

(30) Priorität: 03.09.2009 DE 102009029155
(43) Veröffentlichungstag der Anmeldung: 11.07.2012
(73) Patentinhaber: Robert Bosch GmbH, 70442 Stuttgart (DE)
(72) Erfinder: WILHARM, Torsten, 77833 Ottersweier (DE)
(86) Internationale Anmeldenummer: PCT/EP2010/060192
(87) Internationale Veröffentlichungsnummer: WO 2011/026681

(56) Entgegenhaltungen:
- EP-A2- 0 793 337
- DE-A1-102005 015 783
- JP-A- 2008 245 353
- US-A1- 2007 252 587

## Beschreibung

### Technisches Gebiet

Die Erfindung betrifft Synchronmaschinen, insbesondere permanentmagneterregte Synchronmaschinen, mit einem einen permanenten magnetischen Fluss erzeugenden Läufer. Die Erfindung betrifft weiterhin das Gebiet der sensorlosen Läuferlagebestimmung für Synchronmaschinen.

### Stand der Technik

Zur elektronischen Kommutierung von mehrphasigen Synchronmaschinen ist es notwendig, die Läuferlage des Läufers (Rotor) der Synchronmaschine zu kennen, um eine geeignete von der Läuferlage abhängige Phasenspannung an den jeweiligen Strang der Synchronmaschine anzulegen. Üblicherweise wird die Phasenspannung bzw. der Phasenstrom als konstante Spannung bzw. konstanter Strom angelegt, solange sich der Läufer innerhalb eines bestimmten Bereichs der Läuferlage, insbesondere bei einem Rotor innerhalb eines Winkellagebereichs einer elektrischen Rotorlage, befindet.

Häufig wird bei bürstenlosen Gleichstrommotoren bzw. permanentmagneterregten Synchronmaschinen die Läuferlage mit einer aufwändigen Sensorik bestimmt. Dazu werden häufig Hall-Sensoren oder GMR-Sensoren (GMR: Giant Magnetic Resistance) verwendet, die nahe einem Läufer der Synchronmaschine angeordnet sind und ein elektrisches Signal als Maß für die Rotorlage bereitstellen. Solche zusätzlich in der Synchronmaschine angeordnete Sensoren sind in der Regel störanfällig und stellen einen zusätzlichen Aufwand bei der Herstellung von Synchronmaschinen dar.

Es wird daher zunehmend dazu übergegangen, sensorlose Verfahren zur Bestimmung der Läuferlage zu verwenden. Bei sensorlosen Verfahren wird üblicherweise eine Auswertung des Stromverlaufs durch die Synchronmaschine durchgeführt. Dies ist in der Regel ungenau, da der Stromverlauf in der Synchronmaschine in der Regel von Störsignalen überlagert ist. Dies ist vor allem beim Betrieb bei kleinen Drehzahlen und bei einem Anlauf unter Last der Fall. Daher sind sensorlose Verfahren zur Bestimmung der Läuferlage in der Regel nur beschränkt anwendbar.

Weiterhin ist es möglich, die Läuferlage der Synchronmaschine durch Messung der Induktivität der Statorspule zu bestimmen. Die Induktivität der Statorspule variiert abhängig von der Läuferlage aufgrund der durch die Läufermagneten hervorgerufenen Sättigung in den Statorspulen. Die Abhängigkeit der Induktivität der Statorspule ist eine Folge der durch die Überlagerung des von den Permanentmagneten hervorgerufenen Magnetfelds und des durch den Messimpuls hervorgerufenen Magnetfelds, die sich je nach Läuferlage addieren oder auslöschen können. Bei einer additiven Überlagerung der Magnetfelder gelangt die Statorspule in die Sättigung und deren Induktivität nimmt dadurch ab. Diese Induktivität wird durch einen Messimpuls an der Statorspule gemessen, der vorzugsweise dann angelegt wird, wenn sich die betreffende Statorspule im unbestromten Zustand befindet, um einerseits Einflüsse des Messimpulses auf die Momentenbildung und andererseits Rückwirkungen auf die Messung der momentanen Induktivität zu vermeiden.

Die Genauigkeit der Messung der läuferlageabhängigen Induktivität erfordert, dass die Statorspule unbestromt ist, da sich ansonsten durch Überlagerung des durch den Antriebsstrom durch die Statorspule erzeugten Magnetfelds aufgrund des Effekts der magnetischen Sättigung eine Fehlmessung der Induktivität ergibt. Dadurch ist die Läuferlage nicht exakt bestimmbar.

Die Druckschrift US 2007/252587 offenbart ein Verfahren zum Bestimmen einer Rotorlage einer Synchronmaschine durch Auswerten von elektrischen Testimpulsen, die man durch Anlegen von Spannungsimpulsen an die einzelnen Phasenwicklungen des Stators erhält. Änderungen in der Induktivität der Phasenwicklungen, die durch die Sättigung des Statorkörpers abhängig von der Rotorlage hervorgerufen werden, werden bei zueinander entgegengesetzten Stromrichtungen durch Berechnen der Stromdifferenzen der Ströme der zwei Testimpulse bestimmt. Winkelwerte der Rotorlage werden durch die Anzahl der Phasenwicklungen, die den Stromdifferenzen zugeordnet sind, bestimmt.

Die Druckschrift US 5,854,548 betrifft ein Verfahren und eine Vorrichtung zum Detektieren einer Rotorlage eines Synchronmotors unter Nutzung der Unterschiede der rotorlageabhängigen Induktivitäten zwischen den Phasen. Bei angelegter Spannung werden die Ströme, die durch die Phasenstränge fließen, als Funktion der unterschiedlichen Induktivitäten abhängig von der Rotorlage gleichzeitig ermittelt und der Rotorlagewinkel wird aus den Beziehungen zwischen den drei Strömen ermittelt.

Es ist Aufgabe der vorliegenden Erfindung, ein Verfahren und eine Vorrichtung zur Verfügung zu stellen, mit denen die Läuferlage einer elektrischen Maschine möglichst genau bestimmbar ist.

### Offenbarung der Erfindung

Diese Aufgabe wird durch das Verfahren zum Bestimmen der Rotorlage einer elektrischen Maschine gemäß Anspruch 1 sowie durch das Steuergerät und das Motorsystem gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Ermitteln einer Läuferlage einer zweiphasigen Synchronmaschine mit zwei Strängen, insbesondere zur elektronischen Kommutierung der Synchronmaschine, vorgesehen. Das Verfahren umfasst die folgenden Schritte:
- Ansteuern jedes der Stränge wechselweise in einem ersten Ansteuer-Zeitfenster mit einer Ansteuergröße positiver Polarität und in einem zweiten Ansteuer-Zeitfenster mit einer Ansteuergröße negativer Polarität, wobei sich das erste und das zweite Ansteuer-Zeitfenster wechselweise aneinander anschließen;
- Anlegen einer Ansteuergröße von 0 an einen ersten der Stränge während eines Mess-Zeitfensters, das innerhalb mindestens eines der Ansteuer-Zeitfenster eines Strangs vorgesehen wird;
- Anlegen eines Messimpulses an den entsprechenden Strang innerhalb des Mess-Zeitfensters, um eine läuferlageabhängige Stranginduktivität des entsprechenden Strangs als Angabe zu der Läuferlage zu ermitteln.

Eine Idee des oben beschriebenen Verfahrens besteht darin, bei einer zweiphasigen Synchronmaschine mit einer, insbesondere um 90°, zueinander versetzten Ansteuerung mit aufeinander folgenden Ansteuer-Zeitfenstern Zeitfenster vorzusehen, in denen an einen Strang, d.i. eine Phasenanordnung aus einer oder mehrerer Spulen, die gemeinsam verschaltet sind und die einer Phase zugeordnet sind, keine Ansteuergröße, d.h. keine Spannung und kein Strom angelegt wird. Dies wird erreicht, indem innerhalb der Ansteuer-Zeitfenster eine Ansteuerung mit einer Ansteuergröße ungleich 0 in einem Bereich der elektrischen Läuferlage von weniger als 180° durchgeführt wird. Dadurch entstehen innerhalb der Ansteuer-Zeitfenster Mess-Zeitfenster, während der der entsprechende Strang nicht angesteuert wird, d.h. es wird eine Spannung von 0V angelegt oder dieser wird nicht bestromt. Dieses Mess-Zeitfenster ist dann geeignet, eine Läuferlagemessung vorzunehmen, indem ein Messimpuls während des Mess-Zeitfensters angelegt wird, ohne dass es bei der zweiphasigen Synchronmaschine zu den oben beschriebenen Nachteilen kommt.

Weiterhin kann der ermittelten Stranginduktivität des entsprechenden Strangs eine elektrische Läuferlage zugeordnet werden.

Gemäß einer Ausführungsform können regelmäßig Messimpulse an den entsprechenden Strang angelegt werden, wobei eine elektrische Kommutierung der Ansteuerung in Form einer Änderung der Ansteuergröße an dem entsprechenden Strang durchgeführt wird, wenn die ermittelte Stranginduktivität einer der Stränge einen Schwellenwert über- oder unterschreitet.

Insbesondere kann der Messimpuls als eine Messgröße positiver oder negativer Polarität an einen der Stränge während eines definierten Messimpuls-Zeitfensters angelegt werden.

Die läuferlageabhängige Stranginduktivität kann durch Messen einer Angabe zu einer Flankensteilheit einer Flanke einer resultierenden Größe, die durch das Anlegen des Messimpulses bewirkt wird, insbesondere durch eine vorgegebene Stranginduktivitätsfunktion, ermittelt werden.

Gemäß einer Ausführungsform kann die Angabe zu der Flankensteilheit durch zwei Schwellwertvergleiche der auf das Anlegen des Messimpulses resultierenden Größe mit vorgegebenen Schwellenwerten durchgeführt werden, und die Zeitdauer von dem Erreichen eines ersten der Schwellenwerte zu dem Erreichen eines zweiten der Schwellenwerte als Angabe zu der Flankensteilheit bereitgestellt werden.

Weiterhin kann während des Mess-Zeitfensters an einen zweiten der Stränge ein Ansteuerstrom angelegt werden, der so gewählt wird, dass ein während des Mess-Zeitfensters erzeugtes Drehmoment der Synchronmaschine einem Drehmoment entspricht, das durch Anlegen von Ansteuergrößen ungleich 0 an beide Stränge erzeugt wird.

Gemäß einem weiteren Aspekt ist ein Steuergerät zum Betreiben einer zweiphasigen Synchronmaschine mit zwei Strängen und zum Ermitteln einer Läuferlage der Synchronmaschine, insbesondere zur elektronischen Kommutierung der Synchronmaschine, vorgesehen. Das Steuergerät ist ausgebildet,
- um jeden der Stränge wechselweise in einem ersten Ansteuer-Zeitfenster mit einer Ansteuergröße positiver Polarität und in einem zweiten Ansteuer-Zeitfenster mit einer Ansteuergröße negativer Polarität anzusteuern, wobei sich das erste und das zweite Ansteuer-Zeitfenster wechselweise aneinander anschließen;
- um eine Ansteuergröße von 0 an einen ersten der Stränge während eines Mess-Zeitfensters anzulegen, das innerhalb mindestens eines der Ansteuer-Zeitfenster eines der Stränge vorgesehen wird,
- um innerhalb des Mess-Zeitfensters einen Messimpuls an den entsprechenden Strang anzulegen, um eine Angabe zu läuferlageabhängigen Stranginduktivität des entsprechenden Strangs als Angabe zu der Läuferlage zu ermitteln.

Gemäß einem weiteren Aspekt ist ein Motorsystem vorgesehen. Das Motorsystem umfasst:
- eine zweiphasige Synchronmaschine mit zwei Strängen;
- eine bipolare Treiberschaltung zum Bereitstellen einer bipolaren Ansteuergröße für jeden der Stränge der Synchronmaschine;
- das obige Steuergerät.

Gemäß einem weiteren Aspekt ist ein Computerprogrammprodukt vorgesehen, das einen Programmcode aufweist, der, wenn er auf einem Datenverarbeitungsgerät ausgeführt wird, das obige Verfahren durchführt.

### Kurzbeschreibung der Zeichnungen

Bevorzugte Ausführungsformen werden nachfolgend anhand der beigefügten Zeichnungen näher erläutert. Es zeigen:
- Figur 1: einen Querschnitt einer zweiphasigen Synchronmaschine;
- Figur 2: eine Treiberschaltung die als zweisträngige H-Brückenschaltung ausgebildet ist;
- Figur 3: ein Beispieldiagramm für die Verläufe der gemessenen Induktivitäten abhängig von der Polarität des angelegten Messimpulses und des Strangs über der Läuferlage;
- Figur 4: eine schematische Darstellung des Ansteuerverfahrens bei einer auf 135° reduzierten elektrischen Blocklänge gemäß einer Ausführungsform;
- Figur 5: eine schematische Darstellung der Spannungs- und Stromverläufe bei einer auf 90° reduzierten elektrischen Blocklänge gemäß einer weiteren Ausführungsform.

### Beschreibung von Ausführungsformen

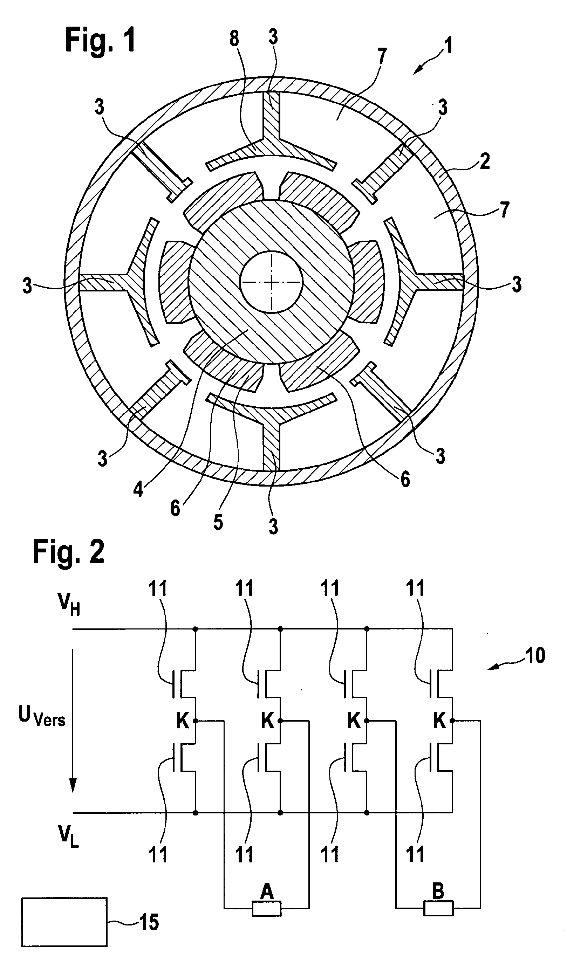

In Figur 1 ist ein Querschnitt durch eine elektrische Maschine in Form eines Synchronmotors 1 schematisch dargestellt. Der Synchronmotor 1 weist eine Statoranordnung 2 mit acht Statorzähnen 3 auf. Die Statoranordnung 2 ist ringförmig und konzentrisch um eine Drehachse eines Rotors 4 angeordnet. Die Statoranordnung 2 weist im Inneren eine ebenfalls um die Drehachse konzentrische Ausnehmung auf.

Der Rotor weist sechs Rotorpole 5 auf, die mit Hilfe von Permanentmagneten 6 ausgebildet sind. Der Rotor 4 ist um die Drehachse drehbeweglich in der Ausnehmung der Statoranordnung 2 angeordnet, so dass die Rotorpole 5 bei einer Drehung des Rotors 4 an inneren Enden der Statorzähne 3 vorbeilaufen. Der Rotor 4 kann vorteilhafterweise mit drei jeweils zweipolig magnetisierten Ferrit-Magnetschalen aufgebaut werden oder mit einem Ring aus kunststoffgebundenem NdFeB.

Statorspulen 7 sind in Form einer Folgepolanordnung an den Statorzähnen 3 angeordnet, d.h. nur jeder zweite Statorzahn 3 ist mit einer Statorspule 7 versehen und weist eine im Vergleich zu unbewickelten Statorspulen 3 als inneres Ende einen verbreiterten Zahnkopf 8 auf. Der Zahnkopf 8 dient einerseits zum Halten der Statorspule 7 auf dem jeweiligen Statorzahn 3 und andererseits zum Verbreitern des Bereichs des von der Statorspule 7 erzeugten und auf den Rotor 4 gerichteten magnetischen Flusses.

Der in Figur 1 gezeigte Aufbau einer Synchronmaschine ist jedoch nur ein Beispiel und es können auch Synchronmaschinen mit davon abweichendem Aufbau in zweiphasig-bipolarer Ausführung verwendet werden. Insbesondere können Synchronmotoren in Topologien mit 8n (n = 1, 2, 3, ..., n) und 6n Rotorpolen vorgesehen sein. Diese Topologien haben den Vorteil, dass durch die Wahl der Anzahl der Statorzähne 3 und durch die Wahl einer Folgezahnanordnung die von den Statorspulen 7 gebildeten, jeweils einer Phase zugeordneten Stränge magnetisch entkoppelt sind, da sie in bezüglich einer elektrischen Rotorlage senkrecht zueinander stehenden Achsen magnetisieren und zusätzlich noch durch Hilfszähne voneinander getrennt sind, die einen magnetischen Rückschluss bilden. Im Prinzip ist die Erfindung anwendbar auf alle zweiphasigen Synchronmotoren, bei denen die Statorspulen 7 möglichst magnetisch entkoppelt sind.

In Figur 2 ist eine Treiberschaltung 10 zur Ansteuerschaltung des zweiphasigen bipolaren Synchronmotors 1 dargestellt. Die Treiberschaltung 10 weist zwei bipolare H-Brückenschaltungen auf. Jede der H-Brückenschaltungen umfasst zwei Serienschaltungen aus Leistungshalbleiterschaltern 11. Jede der Serienschaltungen weist einen ersten Leistungshalbleiterschalter 11 auf, der mit einem ersten Anschluss mit einem hohen Versorgungspotential V_{H} und mit einem zweiten Anschluss mit einem Ausgangsknoten K verbunden ist. Weiterhin weist jede der Serienschaltungen einen zweiten Leistungshalbleiterschalter 12 auf, der mit einem ersten Anschluss mit dem Ausgangsknoten K und mit einem zweiten Anschluss mit einem niedrigen Versorgungspotential V_{L} verbunden ist. Zwischen dem hohen Versorgungspotential V_{H} und dem niedrigen Versorgungspotential V_{L} liegt die Versorgungsspannung U_{Vers} an.

Jeweils die beiden Ausgangsknoten K der Serienschaltungen einer der H-Brückenschaltungen sind mit einem Strang der Statoranordnung 2 des Synchronmotors 1 verbunden. Ein Strang umfasst eine oder mehrere Statorspulen 7 die in geeigneter Weise zur gemeinsamen Bestromung verschaltet sind, d.h. seriell, parallel oder eine Kombination aus serieller und paralleler Verschaltung.

Mit Hilfe der in Figur 2 gezeigten Treiberschaltung 10 können die Stränge A und B unabhängig voneinander angesteuert werden, so dass diese sowohl einzeln als auch gleichzeitig in beliebiger Polarität bestromt werden können. Die einzelnen Leistungshalbleiterschalter 11 werden von einer Steuereinheit 15 angesteuert, so dass nach je nach ausgewählten Schaltzuständen der einzelne Leistungshalbleiterschalter 11 der H-Brückenschaltung eine positive Versorgungsspannung, die negative Versorgungsspannung oder 0V angelegt wird. Durch Anwenden eines Pulsweitenmodulationsverfahrens kann abhängig von einem Tastverhältnis eine effektive Spannung als Ansteuergröße an den jeweiligen Strang A, B angelegt werden, die zwischen der positiven Versorgungsspannung U_{Vers} und der negativen Versorgungsspannung -U_{Vers} liegt. Das Pulsweitenmodulationsverfahren sieht eine periodische Ansteuerung vor, bei der während eines ersten Zeitfensters die positive Versorgungsspannung (bzw. die negative Versorgungsspannung) und während eines zweiten Zeitfensters als Spannung 0V über die Ausgangsknoten K einer der H-Brückenschaltungen ausgegeben wird. Das erste Zeitfenster und das zweite Zeitfenster definieren eine konstante Ansteuerperiode, wobei das Tastverhältnis dem Verhältnis der Zeitdauer des ersten Zeitfensters zur Zeitdauer der Ansteuerperiode entspricht.

Zur Durchführung der Ansteuerung (elektrische Kommutierung) werden abhängig von der elektrischen Rotorlage bestimmte Spannungen an die Stränge der Synchronmaschine 1 angelegt. Die Phasenspannungen zur Ansteuerung werden abhängig von der Rotorlage bestimmt. Aus diesem Grund ist es notwendig, permanent die Rotorlage zu ermitteln, um die geeigneten Phasenspannungen anlegen zu können.

Die Erfassung der Rotorlage erfolgt durch eine permanente, regelmäßige oder zu vorgegebenen Zeitpunkten erfolgende Messung der charakteristischen Stranginduktivitäten, die sich abhängig von der Rotorlage verändern. D.h. durch Zuordnung einer gemessenen Stranginduktivität kann die elektrische Rotorlage durch Rückrechnen, ein Auslesen eines Kennfelds oder dergleichen ermittelt werden.

Die charakteristischen Stranginduktivitäten werden ermittelt, indem Messimpulse mit einer vordefinierten zeitlichen Länge (Messimpuls-Zeitfenster) den ansteuernden Phasenspannungen überlagert werden und Flankensteilheiten als Angaben zu Anstiegszeiten bzw. Abfallzeiten einer resultierenden elektrischen Größe gemessen werden. Eine Angabe über die Anstiegszeit der resultierenden elektrischen Größe kann beispielsweise gemessen werden, indem die durch den Messimpuls bewirkte Flanke der resultierenden elektrischen Größe Schwellwertvergleichen unterzogen wird. Z.B. kann als Angabe über die Anstiegszeit die Zeitdauer des Überschreitens eines ersten bis zu einem Überschreiten eines zweiten Schwellwerts gemessen werden. Alternativ kann auch eine Abfallzeit einer Flanke als die Zeitdauer des Unterschreitens eines ersten bis zu einem Unterschreiten eines zweiten Schwellwerts gemessen werden. Aus den Angaben zu den Anstiegszeiten bzw. den Abfallzeiten kann durch eine geeignete vorgegebene Stranginduktivitätsfunktion, z.B. in Form eines Kennfelds eine Angabe einer Stranginduktivität ermittelt werden.

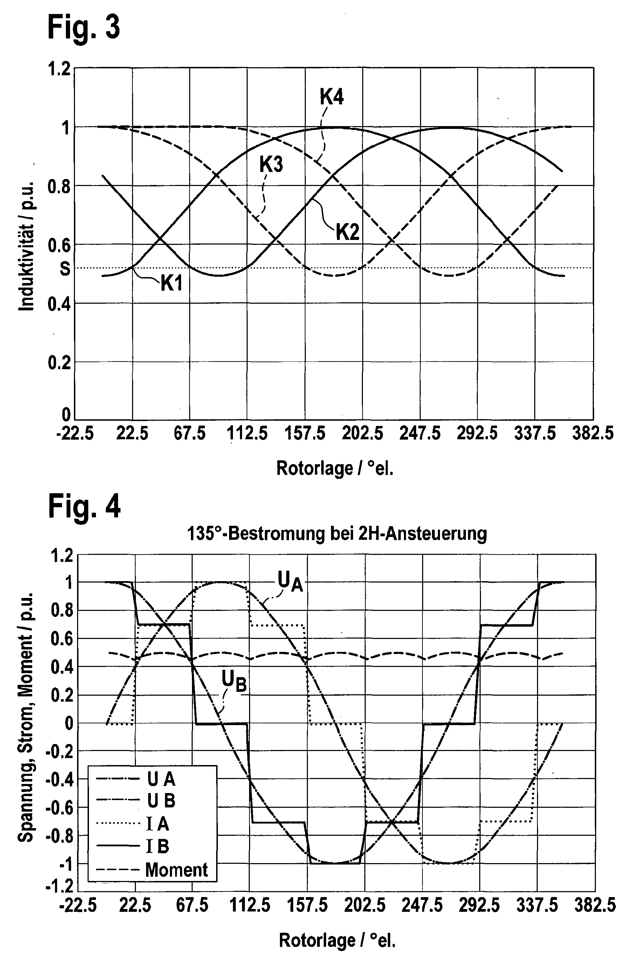

Es ergibt sich ein Verlauf der gemessenen Induktivitätsangaben über der elektrischen Rotorlage, wie er beispielsweise in Figur 3 dargestellt ist. Die elektrische Rotorlage ergibt sich aus der mechanischen Rotorlage multipliziert mit der Anzahl der Rotorpole. Man erkennt den Verlauf der Induktivität einer Statorspule 7 bzw. einer einer der Phasen zugeordneten Anordnung aus mehreren Statorspulen abhängig von der elektrischen Rotorlage. Die vier dargestellten Verläufe der Induktivitätsangaben (hier eine auf die reale Induktivität normierte gemessene Induktivität) entsprechen jeweils Induktivitätsverläufen bei einem Puls positiver Spannung auf dem Strang A (K1), einem Puls positiver Spannung auf dem Strang B (K2), einem Puls negativer Spannung auf dem Strang A (K3) und einem Puls negativer Spannung auf dem Strang B (K4). Man erkennt, dass die gemessene Induktivität bei einer bestimmten elektrischen Rotorlage ein Minimum von ca. 0,5 der realen (ungesättigten) Induktivität erreicht. Diese Rotorlage entspricht einer Rotorlage, bei der der magnetische Fluss in der jeweiligen Statorspule 7 eine Sättigung erreicht, wodurch die Induktivität der betreffenden Statorspule bzw. des betreffenden Strangs abhängt.

Befindet sich bei der Induktivitätsmessung ein Permanentmagnet 6 des Rotors 4 unmittelbar unter (d.h. in radialer Richtung auf einer Linie) der betrachteten Statorspule 7, so ergibt sich bei Verstärkung des Permanentmagnetfelds durch das Spulenfeld ein deutliches Absinken der Stranginduktivität durch eine verstärkte Sättigung des Magnetkreises im Bereich des Statorzahns 3. Bei entgegengesetzter Bestromung ergibt sich ein leichtes Ansteigen der Induktivität. Bei Magneten mit entgegengesetzter Polarität ergeben sich die Verhältnisse umgekehrt, d.h. ein negativer Strom führt zu höherer Sättigung, kleineren Induktivitäten und schnellerem Stromanstieg. Durch die Kombination von positiven und negativen Stromimpulsen in den Strängen A und B lassen sich so vier Bereiche der elektrischen Rotorlage identifizieren, die sich -je nach Art und Rotorlage des angelegten Messimpulses - durch eine messbar kleinere Induktivität auszeichnen. Aus den Stromanstiegszeiten lassen sich so stets die zugehörigen Bereiche der Rotorlage ableiten.

Das Einprägen eines Stromimpulses zur Bestimmung der Rotorlage kann zu einer Störung der Drehmomenterzeugung führen, wenn der Stromimpuls gleichzeitig mit einer Bestromung der Statorspule zum Generieren eines Drehmoments erfolgt. Zudem kann in diesem Fall die Drehmomentwelligkeit zunehmen. Weiterhin kann auch die Messung der Induktivitätsangabe durch die Bestromung der Statorspule 7 insbesondere bei einer Änderung des Stromflusses während der Messung beeinträchtig werden.

Bei zweiphasigen Synchronmotoren ist es bislang üblich, die Bestromung einer Phase in einem Winkelbereich einer elektrischen Rotorlage von 180° mit einer Ansteuergröße (Spannung, Strom) positiver Polarität und für einen Bereich von 180° der elektrischen Rotorlage mit einer Ansteuergröße (Spannung, Strom) negativer Polarität durchzuführen. Die Größe der angelegten Spannung und/oder Stroms kann durch eine Pulsweitenmodulationsansteuerung der Freischaltung variiert werden. Da die Ansteuergröße normalerweise während des gesamten Zeitfensters anliegt, ist es nicht möglich, eine Messung der Induktivität ohne die oben genannten Nachteile durchzuführen.

Es wird dazu nun vorgeschlagen, die Bestromung einer Phase auf einen Lagebereich von weniger als 180° zu begrenzen. Dadurch entstehen Zeitfenster, während denen eine Phase nicht bestromt wird, d.h. eine Spannung von 0V angelegt wird.

In Figur 4 ist ein Diagramm zur Darstellung der Verläufe der Phasenströme und der Phasenspannungen sowie des resultierenden Drehmoments dargestellt. Das Diagramm stellt ein Beispiel einer Bestromung dar, bei der der Phasenstrom mit einer Blocklänge von 135° elektrischer Rotorlage dargestellt ist. D.h. während einer Zeitdauer, innerhalb derer sich der Rotor über eine elektrische Rotorlage von 180° bewegt, wird eine Spannung nur während eines Zeitfensters angelegt, in dem der Rotor sich in einem Bereich von 135° bewegt. Mit anderen Worten liegt während einer Drehung des Rotors über einen Drehwinkelbereich von 45° elektrischer Rotorlage kein Strom an der Statorspule an. Für das gezeigte Beispiel heißt dies, dass im Winkelbereich von 0° bis 22,5° elektrischer Rotorlage und im Winkelbereich von 157,5° bis 180° elektrischer Rotorlage keine Spannung an die Statorspule 7 der entsprechenden Phase angelegt wird. D.h. die Stromblöcke für jede Phase, die während dem Bewegen des Rotors über eine elektrische Rotorlage von 180° angelegt wird, werden auf einen geringeren Winkelbereich begrenzt, so dass Zeitfenster entstehen, in denen keine Spannung zur Erzeugung eines Drehmoments angelegt wird.

Der Verlust des Drehmoments, der sich aus der Verkleinerung der zeitlichen Länge des Stromblocks ergibt, wird dadurch ausgeglichen, dass innerhalb des Stromblocks in dem Bereich der Rotorlage von 180°, z.B. in der zeitlichen Mitte des Stromblocks, die Spannung, d.h. die Stromamplitude, erhöht wird. Die Erhöhung ist so bemessen, dass sie den Verlust des Drehmoments durch die Nicht-Bestromung in dem Bereich von 45° elektrischer Rotorlage auszugleichen. Vorzugsweise werden die Spannungsimpulse dem sinusförmigen Stromverlauf angepasst. Dadurch kann eine geringe Drehmomentwelligkeit erreicht werden und es können gleichzeitig Bestromungslücken geschaffen werden, in denen Testimpulse zur Rotorlagebestimmung abgesetzt werden können, ohne die Ansteuerung des Synchronmotors 1 zu beeinflussen. Mit anderen Worten wird in den elektrischen Rotorlagen, in denen nur sehr wenig Drehmoment durch ein Strang erzeugt wird, wird der entsprechende Strang nicht bestromt und dafür während eines Zeitfensters in der Mitte des Bestromungsblocks der Strom erhöht, so dass dort mehr Drehmoment gebildet wird.

Durch die magnetische Entkopplung der Stränge wird der Messimpuls zur Rotorlagebestimmung nicht oder nur unwesentlich vom Strom im anderen Strang beeinträchtigt.

Wenn die Bereiche elektrischer Rotorlage mit geringen gemessenen Induktivitäten, die sich aus der Induktivitätsmessung mit Messimpulsen ergeben, hinreichend breit und stark ausgeprägt sind, kann die Rotorlage sogar in mehr als vier, beispielsweise in acht, Bereiche aufgelöst werden. Zum Bestimmen von vier Bereichen elektrischer Rotorlage ist es ausreichend, festzustellen, ob eine mit einem bestimmten Messimpuls an einem bestimmten Strang gemessene Induktivität kleiner ist als ein festzulegender Grenzwert. Zum Bestimmen von mehr als vier, insbesondere acht Bereichen elektrischer Rotorlage, muss festgestellt werden, ob mindestens zwei mit einem jeweiligen Messimpuls an einem oder mehreren bestimmten Strängen und mit gleichen oder verschiedenen Polaritäten gemessene Induktivitätsangabe jeweils kleiner sind als ein oder mehrere festzulegende Grenzwerte. So können auch Zwischenpositionen erkannt werden, um die Rotorlage feiner aufzulösen. Dies ermöglicht es, die zur Realisierung der in Figur 4 gezeigten Ansteuerung mit einer Blocklänge von 135° zu erreichen, da die Kommutierungszeitpunkte, an denen zwischen den unterschiedlichen an die Stränge anzulegenden Strom- bzw. Spannungsniveaus (Aussteuergröße) geschaltet wird, durch die Induktivitätsmessung diskriminiert werden können.

In dem Diagramm der Figur 3 ist der Induktivitätsverlauf für verschiedene Testimpulse dargestellt. Bei Betrachtung des Strangs A und dessen Ansteuerung mit einer Blocklänge von 135° kann die elektrische Kommutierung, d.h. das Ansteuern mit entsprechenden Phasenströmen in vorgegebenen Zeitfenstern durch Schwellwertvergleiche der gemessenen normierten Induktivitäten bestimmt werden. Beispielsweise wird als Aussteuerung ein Phasenstrom von 0V an den Strang A angelegt, bis die mit Hilfe eines ersten der Messimpulse positiver Polarität (Kurve K1) an dem Strang A ermittelte Induktivität einen Schwellenwert S übersteigt. Der Schwellenwert S wird durch die durch den ersten Messimpuls detektierte Induktivität bei einer elektrischen Rotorlage von 22,5 ° überschritten. Wird dies festgestellt, wird ein Strom mit einem ersten positiven Stromwert angelegt, d.h. ab einer elektrischen Rotorlage von 22,5°. Weiterhin wird die Induktivität mit Hilfe eines zweiten Messimpulses gemessen, der eine negative Polarität aufweist. Bei Unterschreiten des Schwellenwerts S durch die mit dem zweiten Messimpuls gemessene Induktivität (Kurve K2) wird der Phasenstrom des Strangs A wieder auf 0 A gesetzt.

Weiterhin wird der Phasenstrom des Strangs A auf einen zweiten negativen Stromwert gesetzt, wenn die durch den zweiten Messimpuls gemessene Induktivität (Kurve K2) den Schwellenwert S übersteigt. Unterschreitet die durch den ersten Messimpuls gemessene Induktivität (Kurve K1) den Schwellenwert S wieder, so wird der Phasenstrom auf 0A gesetzt. D.h. Solange entweder die durch den ersten Messimpuls oder den zweiten Messimpuls gemessene Induktivität den Schwellenwert unterschreitet, wird ein Phasenstrom von 0 A angelegt.

Die Überhöhung des Phasenstroms in Richtung positiver Ströme oder in Richtung negativer Ströme in der Mitte des jeweiligen Stromblocks erfolgt, solange ein mit einem dritten Messimpuls auf dem zweiten Strang B mit positiver Polarität gemessene Induktivität (Kurve K3) bzw. ein mit einem vierten Messimpuls auf dem zweiten Strang B mit negativer Polarität gemessene Induktivität (Kurve K4) den Schwellenwert S unterschreitet.

Das Verfahren wird für den zweiten Strang B wird analog, d.h. auf gleiche Weise mit vertauschten Strängen A, B durchgeführt.

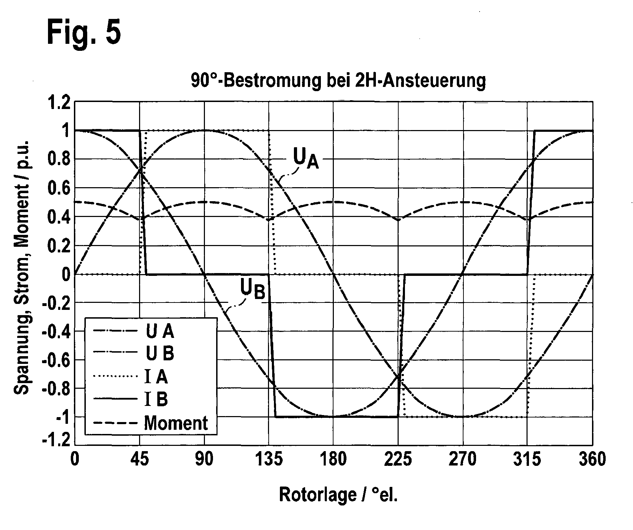

In Figur 5 ist ein weiteres Beispiel mit einer Bestromung der Stränge mit einer Blocklänge eines Bereichs von 90° elektrischer Rotorlage dargestellt. Dabei erfolgt eine Bestromung eines ersten Strangs A bei einer elektrischen Rotorlage zwischen 45° und 135° gemäß einem Stromblock positiver Polarität und zwischen 225° und 315° mit einem Stromblock negativer Polarität. Für einen zweiten Strang B erfolgt eine Bestromung zwischen 0° und 45° sowie zwischen 315° und 360° mit einem Stromblock positiver Polarität und zwischen 135° und 225° mit einem Stromblock negativer Polarität. In den übrigen Bereichen der elektrischen Rotorlage ist keine Spannung bzw. kein Strom an die Stränge A, B angelegt.

Die übrigen Bereiche elektrischer Rotorlage der Stränge, in denen keine Bestromung des jeweiligen Stranges erfolgt, eignen sich somit, um in dem jeweiligen Strang einen Messimpuls zur Ermittlung der Rotorlage anzulegen. Zur Sicherstellung, dass bei der Ermittlung der Rotorlage die einzelnen Bereiche der elektrischen Rotorlage hinreichend genau ermittelt werden, um die Blocklänge zur Bestromung zu definieren, werden entweder mehrere Strommessungen mit mehreren Testimpulsen vorgenommen oder es wird zwischen den einzelnen Messungen während der Zeitfenster, in denen der jeweilige Strang nicht bestromt ist, entsprechende Induktivitätsmessungen vorgenommen und die Zwischenlagen für die so ermittelten elektrischen Rotorlagen durch Extrapolation bestimmt.

Durch das vorliegende Verfahren lassen sich die Zeiten für Messimpulse, in denen die drehmomentbildende Bestromung ausgesetzt wird, gegenüber den bekannten Verfahren deutlich reduzieren, da das drehmomentbildende Verfahren Zeitfenster vorsieht, in denen einer oder der andere Strang nicht bestromt wird, wobei in den Zeitfenstern, in denen keine Bestromung durchgeführt wird, Messungen zur Rotorlage durchgeführt werden.

Der Vorteil des oben beschriebenen Verfahrens besteht darin, dass es auch im Stillstand der Synchronmaschine anwendbar ist. Durch die magnetische Entkopplung der Stränge A und B ist der Induktivitätseinfluss isoliert ohne die Einflüsse der anderen Stränge zu messen und es lassen sich die Messimpulse gleichzeitig aufbringen, wodurch die benötigte Zeit zum Anlegen der Messimpulse reduziert werden kann. Dazu können die Testimpulse in den Bestromungslücken eingebracht werden, in denen ohnehin kein Drehmoment erzeugt wird.

Die Kombination von einer bipolaren zweiphasigen Treiberschaltung mit einer Topologie eines Synchronmotors mit 8 Statorzähnen und 6 Rotorpolen mit Folgezahnanordnung ergibt sich gegenüber einer dreiphasigen Synchronmaschine ein Vorteil durch einen höheren Wicklungsfaktor. Bei einer dreiphasigen Ansteuerung werden ebenfalls von Strom und Rotorlage abhängige Induktivitäten zur Rotorlageerkennung genutzt. Dort besteht jedoch das Problem, dass die Rotorlage nicht unter allen Umständen eindeutig bestimmt werden kann. Die Schwierigkeit besteht darin, dass durch die dreiphasige Ansteuerung einer z.B. sternverschalteten Synchronmaschine immer ein Strang gemessen wird, in dem der auszuwertende Effekt der von Strom und Lage abhängiger Induktivität auftritt, und gleichzeitig zwei Stränge, bei denen er nicht auftritt. Somit ist der relative Unterschied der Induktivitäten gering. Auch bei einer Dreiecksschaltung würden immer ein Strang mit Sättigung im Statorzahn und zwei Stränge ohne Sättigung im Statorzahn gemeinsam gemessen. Der auszuwertende Effekt ist nur dann hinreichend groß für eine sichere Erkennung, wenn die zusätzliche Induktivität in Abhängigkeit über der Rotorlage durch den Reluktanzunterschied zwischen Folgepol und Magnetpol hinzukommt.

## Patentansprüche

1. Verfahren zum Ermitteln einer Läuferlage einer zweiphasigen Synchronmaschine (1) mit zwei Strängen (A, B), insbesondere zur elektronischen Kommutierung der Synchronmaschine, mit folgenden Schritten:
- Ansteuern jedes der Stränge (A, B) wechselweise in einem ersten Ansteuer-Zeitfenster mit einer Ansteuergröße positiver Polarität und in einem zweiten Ansteuer-Zeitfenster mit einer Ansteuergröße negativer Polarität, wobei sich das erste und das zweite Ansteuer-Zeitfenster wechselweise unmittelbar aneinander anschließen; .
- Anlegen einer Ansteuergröße von 0 an einen ersten der Stränge (A, B) während eines Mess-Zeitfensters, das innerhalb mindestens eines der Ansteuer-Zeitfenster eines Strangs vorgesehen wird;
- Anlegen eines Messimpulses an den ersten Strang (A, B) innerhalb des Mess-Zeitfensters, um eine läuferlageabhängige Stranginduktivität des entsprechenden Strangs (A, B) als Angabe zu der Läuferlage zu ermitteln, wobei regelmäßig Messimpulse an den ersten Strang angelegt werden, wobei eine elektrische Kommutierung der Ansteuerung in Form einer Änderung der Ansteuergröße an dem ersten Strang (A, B) durchgeführt wird, wenn die ermittelte Stranginduktivität einer der Stränge (A, B) einen Schwellenwert über- oder unterschreitet.

2. Verfahren nach Anspruch 1, wobei der ermittelten Stranginduktivität des ersten Strangs (A, B) eine elektrische Läuferlage zugeordnet wird.

3. Verfahren nach einem der Ansprüche 1 bis 2, wobei der Messimpuls als eine Messgröße positiver oder negativer Polarität an einen der Stränge (A, B) während eines definierten Messimpuls-Zeitfensters angelegt wird.

4. Verfahren nach einem der Ansprüche 1 bis 3, wobei die läuferlageabhängige Stranginduktivität durch Messen einer Angabe zu einer Flankensteilheit einer Flanke einer resultierenden Größe, die durch das Anlegen des Messimpulses bewirkt wird, insbesondere durch eine vorgegebene Stranginduktivitätsfunktion, ermittelt wird.

5. Verfahren nach Anspruch 4, wobei die Angabe zu der Flankensteilheit durch zwei Schwellwertvergleiche der auf das Anlegen des Messimpulses resultierenden Größe mit vorgegebenen Schwellenwerten durchgeführt wird, und die Zeitdauer von dem Erreichen eines ersten der Schwellenwerte zu dem Erreichen eines zweiten der Schwellenwerte als Angabe zu der Flankensteilheit bereitgestellt wird.

6. Verfahren nach einem der Ansprüche 1 bis 5, wobei während des Mess-Zeitfensters an einen zweiten der Stränge ein Ansteuerstrom angelegt wird, der so gewählt wird, dass ein während des Mess-Zeitfensters erzeugtes Drehmoment der Synchronmaschine (1) einem Drehmoment entspricht, das durch Anlegen von Ansteuergrößen ungleich 0 an beide Stränge (A, B) erzeugt wird.

7. Steuergerät (15) zum Betreiben einer zweiphasige Synchronmaschine (1) mit zwei Strängen und zum Ermitteln einer Läuferlage der Synchronmaschine (1), insbesondere zur elektronischen Kommutierung der Synchronmaschine (1),
wobei das Steuergerät (15) ausgebildet ist,
- um jeden der Stränge wechselweise in einem ersten Ansteuer-Zeitfenster mit einer Ansteuergröße positiver Polarität und in einem zweiten Ansteuer-Zeitfenster mit einer Ansteuergröße negativer Polarität anzusteuern, wobei sich das erste und das zweite Ansteuer-Zeitfenster wechselweise aneinander anschließen;
- um eine Ansteuergröße von 0 an einen ersten der Stränge (A, B) während eines Mess-Zeitfensters anzulegen, das innerhalb mindestens eines der Ansteuer-Zeitfenster eines der Stränge (A, B) vorgesehen wird,
- um innerhalb des Mess-Zeitfensters einen Messimpuls an den entsprechenden Strang anzulegen, um eine Angabe zu läuferlageabhängigen Stranginduktivität des entsprechenden Strangs (A, B) als Angabe zu der Läuferlage zu ermitteln;
- um regelmäßig Messimpulse an den ersten Strang anzulegen und um eine elektrische Kommutierung der Ansteuerung in Form einer Änderung der Ansteuergröße an dem ersten Strang (A, B) durchzuführen, wenn die ermittelte Stranginduktivität einer der Stränge (A, B) einen Schwellenwert über- oder unterschreitet.

8. Motorsystem umfassend:
- eine zweiphasige Synchronmaschine (1) mit zwei Strängen (A, B);
- eine bipolare Treiberschaltung (10) zum Bereitstellen einer bipolaren Ansteuergröße für jeden der Stränge (A, B) der Synchronmaschine (1);
- ein Steuergerät (15) nach Anspruch 7.

9. Computerprogrammprodukt, das einen Programmcode aufweist, der, wenn er auf einem Datenverarbeitungsgerät ausgeführt wird, das Verfahren gemäß einem der Ansprüche 1 bis 5 durchführt.

## Claims

1. Method for determining a rotor position of a two-phase synchronous machine (1) having two winding phases (A, B), in particular for electronically commutating the synchronous machine, comprising the following steps:
- driving each of the winding phases (A, B) alternately in a first drive time window with a drive variable of positive polarity and in a second drive time window with a drive variable of negative polarity, the first drive time window and the second drive time window directly following one another alternately;
- applying a drive variable of 0 to a first of the winding phases (A, B) during a measurement time window, which is provided within at least one of the drive time windows of a winding phase;
- applying a measurement pulse to the one winding phase (A, B) within the measurement time window in order to determine a rotor-position-dependent winding phase inductance of the corresponding winding phase (A, B) as an indication of the rotor position,
wherein measurement pulses are applied regularly to the first winding phase, with electrical commutation of the driving in the form of a change in the drive variable on the first winding phase (A, B) being implemented when the determined winding phase inductance of one of the winding phases (A, B) exceeds or falls below a threshold value.

2. Method according to Claim 1, wherein an electrical rotor position is assigned to the determined winding phase inductance of the first winding phase (A, B).

3. Method according to one of Claims 1 to 2, wherein the measurement pulse is applied, as a measured variable of positive or negative polarity, to one of the winding phases (A, B) during a defined measurement pulse time window.

4. Method according to one of Claims 1 to 3, wherein the rotor-position-dependent winding phase inductance is determined by measuring an indication of an edge gradient of an edge of a resultant variable which is caused by the application of the measurement pulse, in particular by a predetermined winding phase inductance function.

5. Method according to Claim 4, wherein the indication of the edge gradient is implemented by two threshold value comparisons of the variable resulting from the application of the measurement pulse with predetermined threshold values, and the time period from the time at which a first of the threshold values is reached to the time at which a second of the threshold values is reached is provided as an indication of the edge gradient.

6. Method according to one of Claims 1 to 5, wherein, during the measurement time window, a drive current is applied to a second of the winding phases, said drive current being selected in such a way that a torque of the synchronous machine (1) generated during the measurement time window corresponds to a torque which is generated by application of drive variables unequal to 0 to both winding phases (A, B).

7. Control device (15) for operating a two-phase synchronous machine (1) having two winding phases and for determining a rotor position of the synchronous machine (1), in particular for electronically commutating the synchronous machine (1),
wherein the control device (15) is designed
- to drive each of the winding phases alternately in a first drive time window with a drive variable of positive polarity and in a second drive time window with a drive variable of negative polarity, the first drive time window and the second drive time window following one another alternately;
- to apply a drive variable of 0 to a first of the winding phases (A, B) during a measurement time window, which is provided within at least one of the drive time windows of one of the winding phases (A, B),
- to apply a measurement pulse to the corresponding winding phase within the measurement time window in order to determine an indication of the rotor-position-dependent winding phase inductance of the corresponding winding phase (A, B) as an indication of the rotor position,
- to apply measurement pulses regularly to the first winding phase, and to implement electrical commutation of the driving in the form of a change in the drive variable on the first winding phase (A, B) when the determined winding phase inductance of one of the winding phases (A, B) exceeds or falls below a threshold value.

8. Motor system, comprising:
- a two-phase synchronous machine (1) having two winding phases (A, B);
- a bipolar driver circuit (10) for providing a bipolar drive variable for each of the winding phases (A, B) of the synchronous machine (1);
- a control device (15) according to Claim 7.

9. Computer program product having a program code which, when run on a data processing device, implements the method according to one of Claims 1 to 5.

## Revendications

1. Procédé de détermination de la position de l'induit d'une machine synchrone (1) biphasée présentant deux barres (A, B), et en particulier pour la commutation électronique de la machine synchrone, le procédé présentant les étapes suivantes :
commande de chacune des deux barres (A, B) alternativement dans une première fenêtre temporelle de commande par une grandeur de commande de polarité positive et dans une deuxième fenêtre temporelle de commande par une grandeur de commande de polarité négative, la première et la deuxième fenêtre de commande se succédant mutuellement et en alternance directe,
application d'une grandeur de commande de 0 sur une première des barres (A, B) pendant une fenêtre temporelle de mesure prévue à l'intérieur d'au moins l'une des fenêtres temporelles de commande de barre,
application d'une impulsion de mesure sur la première barre (A, B) à l'intérieur de la fenêtre temporelle de mesure pour déterminer l'inductivité de la barre correspondante (A, B) en fonction de la position de l'induit comme donnée de position de l'induit,
des impulsions de mesure étant appliquées régulièrement sur la première barre et une commutation électrique de la commande qui présente la forme d'une modification de la grandeur de commande appliquée sur la première barre (A, B) étant exécutée si l'inductivité déterminée pour l'une des barres (A, B) dépasse ou n'atteint pas une valeur de seuil.

2. Procédé selon la revendication 1, dans lequel une position électrique de l'induit est associée à l'inductivité déterminée pour la première barre (A, B).

3. Procédé selon l'une des revendications 1 et 2, dans lequel l'impulsion de mesure est appliquée comme grandeur de mesure de polarité positive ou négative sur l'une des barres (A, B) pendant une fenêtre temporelle définie de l'impulsion de mesure.

4. Procédé selon l'une des revendications 1 à 3, dans lequel l'inductivité de la barre en fonction de la position de l'induit est déterminée par mesure d'une donnée de raideur de la pente du flanc d'une grandeur résultante qui résulte de l'application de l'impulsion de mesure, en particulier par une fonction prédéterminée d'inductivité de barre.

5. Procédé selon la revendication 4, dans lequel la donnée de raideur de la pente du flanc est obtenue par deux comparaisons de valeurs de seuil des grandeurs résultant de l'application de l'impulsion de mesure avec des valeurs de seuil prédéterminées et dans lequel la durée qui s'écoule entre l'atteinte de la première des valeurs de seuil et l'atteinte d'une deuxième des valeurs de seuil est délivrée comme donnée de raideur de la pente du flanc.

6. Procédé selon l'une des revendications 1 à 5, dans lequel pendant la fenêtre temporelle de mesure, un courant de commande sélectionné de telle sorte que le couple de rotation de la machine synchrone (1) formé pendant la fenêtre temporelle de mesure correspond à un couple de rotation obtenu par application de grandeurs de commande différentes de 0 sur les deux barres (A, B) est appliqué sur l'une des barres.

7. Appareil de commande (15) destiné à conduire une machine synchrone (1) biphasée présentant deux barres et pour déterminer la position de l'induit de la machine synchrone (1), en particulier pour la commutation électronique de la machine synchrone (1), l'appareil de commande (15) étant configuré pour
commander chacune des barres de manière alternée dans une première fenêtre temporelle de commande par une grandeur de commande de polarité positive et dans une deuxième fenêtre temporelle de commande par une grandeur de commande de polarité négative, la première et la deuxième fenêtre temporelle de commande se suivant mutuellement en alternance,
pour appliquer une grandeur de commande de 0 sur une première des barres (A, B) pendant une fenêtre temporelle de mesure prévue à l'intérieur d'au moins une des fenêtres temporelles de commande de l'une des barres (A, B),
pour appliquer à l'intérieur de la fenêtre temporelle de mesure une impulsion de mesure sur la barre correspondante pour déterminer une donnée d'inductivité de la barre correspondante (A, B) en fonction de la position de l'induit comme donnée de position de l'induit,
pour appliquer régulièrement des impulsions de mesure sur la première barre et pour exécuter une commutation électrique de la commande sous la forme d'une modification des grandeurs de commande appliquées sur la première barre (A, B) si l'inductivité déterminée pour l'une des barres (A, B) dépasse ou n'atteint pas une valeur de seuil.

8. Système de moteur comprenant
une machine synchrone (1) biphasée présentant deux barres (A, B),
un circuit pilote bipolaire (10) qui délivre une grandeur de commande bipolaire à chacune des barres (A, B) de la machine synchrone (1) et
un appareil de commande (15) selon la revendication 7.

9. Produit de programme informatique qui présente un code de programme qui, lorsqu'il est exécuté sur un appareil de traitement de données, met en oeuvre le procédé selon l'une des revendications 1 à 5.
